(19) Europäisches Patentamt / European Patent Office / Office européen des brevets

(11) **EP 4 300 794 A1**

(12) **EUROPEAN PATENT APPLICATION**
published in accordance with Art. 153(4) EPC

(43) Date of publication:
**03.01.2024 Bulletin 2024/01**

(21) Application number: **21927826.4**

(22) Date of filing: **25.02.2021**

(51) International Patent Classification (IPC):
**H02K 15/12** *(2006.01)*    **H02K 1/27** *(2022.01)*

(52) Cooperative Patent Classification (CPC):
**H02K 1/27; H02K 15/12**

(86) International application number:
**PCT/JP2021/007010**

(87) International publication number:
**WO 2022/180724 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **TSUCHIDA, Kazuchika**
**Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(54) **ELECTRIC MOTOR**

(57)    A motor (100) includes a rotor main body (12) supported by a rotary shaft (11), and a stator (5). The stator (5) includes: a stator core (20) having a first end surface (22c) that is one end surface in an axial direction of the rotary shaft (11), and a second end surface (22d) that is the other end surface in the axial direction, a length of the stator core (20) in the axial direction being less than a length of the rotor main body (12) in the axial direction; at least one flux capture member (41, 42) disposed on at least one of the first end surface (22c) and the second end surface (22d) and made of magnetic material, the at least one flux capture member capturing a magnetic flux of the rotor main body (12); and a molded resin portion (50) covering the at least one flux capture member (41, 42) and the stator core (20).

FIG. 1

EP 4 300 794 A1

## Description

## Technical Field

The present disclosure relates to a motor.

## Background Art

There is known a motor in which the length of a stator in an axial direction is generally equal to the length of a rotor main body in the axial direction. For example, see Patent Literature 1.

## Citation List

## Patent Literature

Patent Literature 1: Japanese Patent Application Publication No. 2005-198440 (see, e.g., FIG. 1)

## Summary of Invention

## Technical Problem

However, in the motor of Patent Literature 1, when the length of the stator in the axial direction is made less than the length of the rotor main body in the axial direction in order to reduce the cost of the motor, the amount of magnetic flux flowing from the rotor main body to the stator is reduced. There is desired a technique for reducing the reduction in the amount of magnetic flux flowing from the rotor main body to the stator while saving the cost of the motor.

An object of the present disclosure is to reduce the reduction in the amount of magnetic flux flowing from the rotor main body to the stator while saving the cost.

## Solution to Problem

A motor according to an aspect of the present disclosure includes: a rotor main body supported by a rotary shaft; and a stator, wherein the stator includes: a stator core having a first end surface that is one end surface in an axial direction of the rotary shaft, and a second end surface that is another end surface in the axial direction, a length of the stator core in the axial direction being less than a length of the rotor main body in the axial direction; at least one flux capture member disposed on at least one of the first end surface and the second end surface and made of magnetic material, the at least one flux capture member capturing a magnetic flux of the rotor main body; and a molded resin portion covering the at least one flux capture member and the stator core.

## Advantageous Effects of Invention

The present disclosure makes it possible to reduce the reduction in the amount of magnetic flux flowing from the rotor main body to the stator while saving the cost.

## Brief Description of Drawings

FIG. 1 is a sectional view illustrating a configuration of a motor according to a first embodiment.
FIG. 2 is a plan view illustrating a configuration of a stator core of a stator of the motor illustrated in FIG. 1.
FIG. 3 is an enlarged sectional view illustrating part of the configuration of the motor illustrated in FIG. 1.
FIG. 4 is an enlarged plan view illustrating part of the configuration of the stator of the motor according to the first embodiment.
FIG. 5 is a sectional view illustrating a configuration of a motor according to a second embodiment.
FIG. 6 is a sectional view illustrating a configuration of a motor according to a first modification of the second embodiment.
FIG. 7 is a sectional view illustrating a configuration of a motor according to a second modification of the second embodiment.
FIG. 8 is a sectional view illustrating a configuration of a motor according to a third modification of the second embodiment.

## Description of Embodiments

Motors according to embodiments of the present disclosure will be described below with reference to the drawings. The following embodiments are merely examples, and can be modified in various ways within the scope of the present disclosure.

To facilitate understanding of relationships between the drawings, each drawing shows an xyz orthogonal coordinate system. The z axis is a coordinate axis parallel to axes C of rotors of motors. The x axis is a coordinate axis perpendicular to the z axis. The y axis is a coordinate axis perpendicular to both the x and z axes.

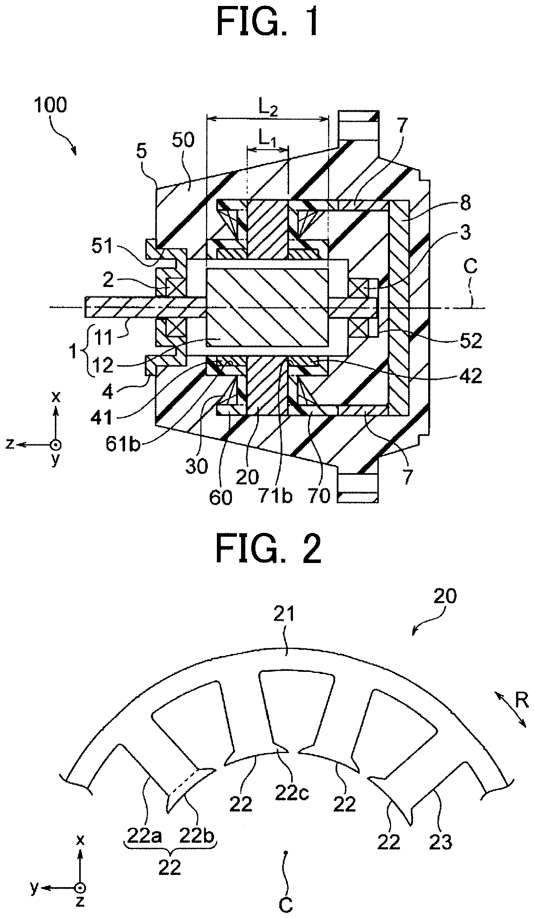

FIG. 1 is a sectional view illustrating a configuration of a motor 100 according to a first embodiment. As illustrated in FIG. 1, the motor 100 includes a rotor 1, a bearing 2 as a first bearing, a bearing 3 as a second bearing, a metal bracket 4 as a first bearing holder, and a molded stator 5 as a stator.

The rotor 1 includes a shaft 11 as a rotary shaft, and a permanent magnet 12 as a rotor main body. The rotor 1 is rotatable about an axis C of the shaft 11. The shaft 11 projects in the +z-axis direction from the molded stator 5. In the following description, a direction along a circumference of a circle centered on the axis C of the shaft 11 is referred to as a "circumferential direction" (e.g., circumferential direction R shown by an arrow in FIG. 2 to be described later). Also, the z-axis direction is referred to as an "axial direction", and directions perpendicular to the axial direction are referred to as "radial directions". Also, a side (i.e., the +z-axis side) on which the shaft 11 projects is referred to as a "load side", and a side (i.e., the -z-axis side) opposite the load side of the shaft 11 is referred to as an "anti-load side".

The permanent magnet 12 is mounted to the shaft 11. In the example illustrated in FIG. 1, the permanent magnet 12 is a cylindrical magnet elongated in the z-axis direction. North poles and south poles are alternately formed in an outer periphery of the permanent magnet 12. The rotor main body of the rotor 1 may be constituted by a rotor core fixed to the shaft 11 and the permanent magnet 12 mounted to the rotor core.

The bearing 2 is a bearing that supports the load side of the shaft 11, and the bearing 3 is a bearing that supports the anti-load side of the shaft 11. The bearing 2 is held by the metal bracket (also referred to below as the "first metal bracket") 4. The metal bracket 4 is formed from, for example, a steel sheet. The bearing 3 is held by a bearing holder (i.e., bearing holder 52 to be described later) provided in the molded stator 5.

The molded stator 5 includes a stator core 20, multiple coils 30, flux capture members 41 and 42, and a molded resin portion 50.

FIG. 2 is a plan view illustrating part of the configuration of the stator core 20 illustrated in FIG. 1. As illustrated in FIG. 2, the stator core 20 has a first end surface 22c that is an end surface on one side (i.e., the +z-axis side) in the z-axis direction, and a second end surface 22d that is an end surface on the other side (i.e., the -z-axis side) in the z-axis direction. Also, the stator core 20 includes a yoke 21 extending in the circumferential direction R, and multiple teeth 22. The multiple teeth 22 are arranged at predetermined intervals in the circumferential direction R. A slot 23 is formed between each two of the multiple teeth 22 adjacent to each other in the circumferential direction R. The slots 23 are spaces in which the coils 30 are accommodated. The multiple coils 30 illustrated in FIG. 1 are wound around the respective teeth 22.

The multiple teeth 22 face the rotor 1 (see FIG. 1) in radial directions. Each of the multiple teeth 22 includes a tooth main body 22a and a tooth tip 22b. The tooth main body 22a extends inward in a radial direction from the yoke 21. The tooth tip 22b is located inward from the tooth main body 22a in the radial direction, and is wider than the tooth main body 22a in the circumferential direction R.

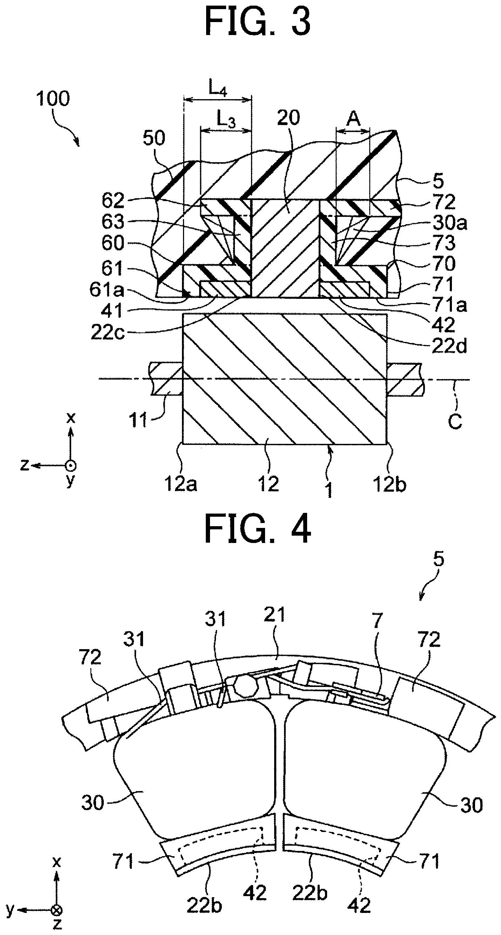

FIG. 3 is an enlarged sectional view illustrating part of the configuration of the motor 100 illustrated in FIG. 1. As illustrated in FIG. 3, when a first length that is a length of the stator core 20 in the z-axis direction is denoted by $L_1$, and a second length that is a length of the permanent magnet 12 in the z-axis direction is denoted by $L_2$, the length $L_1$ is less than the length $L_2$. That is, the lengths $L_1$ and $L_2$ satisfy the following formula (1):

$$L_1 < L_2. \qquad (1)$$

Here, the stator core 20 includes multiple electromagnetic steel sheets (not illustrated) stacked in the z-axis direction. By virtue of the lengths $L_1$ and $L_2$ satisfying formula (1), since the number of electromagnetic steel sheets provided in the stator core 20 is reduced, the cost of the stator core 20 can be reduced. Thus, the cost of the motor 100 can be reduced. In the first embodiment, the first end surface 22c and second end surface 22d of the stator core 20 are located between an end surface 12a of the permanent magnet 12 on the +z-axis side and an end surface 12b of the permanent magnet 12 on the -z-axis side. The motor 100 can be implemented such that one of the first end surface 22c and second end surface 22d is not located between the end surface 12a of the permanent magnet 12 on the +z-axis side and the end surface 12b of the permanent magnet 12 on the -z-axis side. For example, the second end surface 22d of the stator core 20 may be located outward from the end surface 12b of the permanent magnet 12 on the -z-axis side in the axial direction.

In general, when the length of a stator core in the z-axis direction is less than the length of a rotor main body (in the first embodiment, the permanent magnet 12) in the z-axis direction, the magnetic flux generated from the portion of the rotor main body that does not face the stator core in radial directions is less likely to flow to the stator. Specifically, since it is less likely to flow from end portions of the rotor main body on both sides in the z-axis direction to the stator core and coils, the amount of magnetic flux flowing from the rotor main body to the stator is reduced. In this case, the efficiency of the motor is reduced.

In the motor 100 according to the first embodiment, the flux capture members 41 and 42 are respectively disposed on first end surfaces 22c and second end surfaces 22d of the teeth 22. The flux capture members 41 and 42 are made of magnetic material, and capture the magnetic flux of the permanent magnet 12. Thereby, the magnetic flux generated from a portion (e.g., the first end surface 12a and second end surface 12b of the permanent magnet 12) of the permanent magnet 12 that does not face the stator core 20 in radial directions easily flows to the stator core 20 and coils 30 through the flux capture members 41 and 42. This can prevent reduction in the efficiency of the motor 100.

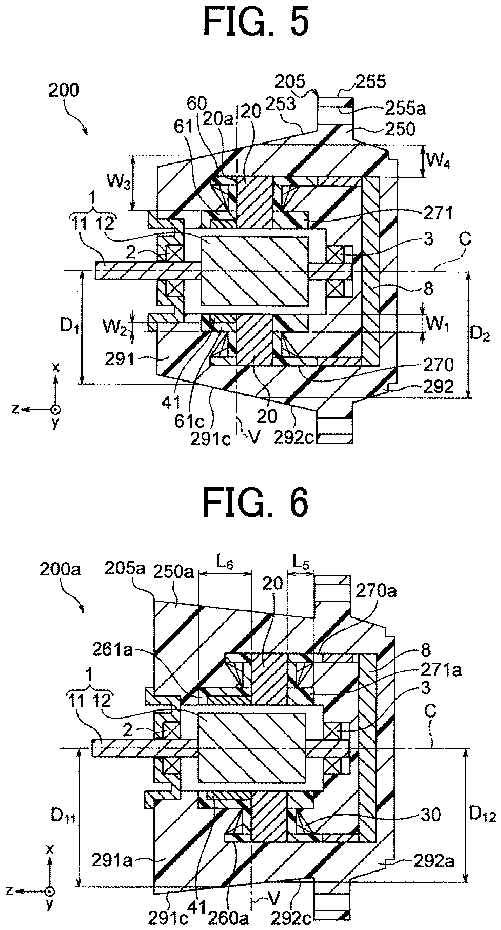

Also, since the flux capture members 41 and 42 are disposed on the teeth 22 of the stator core 20, the flux capture members 41 and 42 are located close to the permanent magnet 12, and thus the magnetic flux of the permanent magnet 12 is easily captured by the flux capture members 41 and 42. Also, in the example illustrated in FIG. 3, the whole of the surface of each of the flux capture members 41 and 42 facing inward in radial directions faces an inner periphery of the permanent magnet 12 in radial directions. It is possible that at least part of the surface facing inward in radial directions faces the inner periphery of the permanent magnet 12. Also, as illustrated in FIG. 5 to be described later or the like, the molded stator 5 may be implemented such that it does not include the flux capture members 42 of the flux capture members 41 and 42.

The flux capture members 41 and 42 are, for example, metal pieces made of metal. Specifically, the flux capture members 41 and 42 are iron pieces made of iron. The flux capture members 41 and 42 and stator core 20 are covered by the molded resin portion 50. Thereby, the flux capture members 41 and 42 are fixed to the stator core 20. Since the flux capture members 41 and 42 and stator core 20 are covered by the molded resin portion 50, no fasteners (e.g., bolts) for fixing the flux capture members 41 and 42 to the stator core 20 are required. This can reduce the number of parts of the motor 100, and simplify the assembly process of the motor 100.

Of end surfaces of the flux capture members 41 and 42 in the z-axis direction, the end surfaces of the flux capture members 41 and 42 on the stator core 20 side are in contact with the first end surface 22c and second end surface 22d, respectively. Also, the flux capture members 41 and 42 are elongated in the z-axis direction. Thereby, the flux capture members 41 and 42 face end portions of the permanent magnet 12 on both sides in the z-axis direction, in radial directions. Thus, the magnetic flux of the permanent magnet 12 easily flows to the flux capture members 41 and 42, and thus the magnetic flux easily flows to the stator core 20 and coils 30 through the flux capture members 41 and 42.

The molded resin portion 50 is made of, for example, thermosetting resin. The molded resin portion 50 is molded by, for example, injection molding. Also, the molded resin portion 50 is integrated with the stator core 20, coils 30, flux capture members 41 and 42, and a first insulator 60 and a second insulator 70 to be described later, by integral molding.

The molded resin portion 50 includes an opening (also referred to below as the "first opening") 51, and the bearing holder 52. The metal bracket 4 is fixed in the opening 51. The metal bracket 4 is fixed in the opening 51 by, for example, press fitting.

The bearing holder 52 is a recess in the molded resin portion 50 in which the bearing 3 on the anti-load side is held. A circuit board 8 is embedded in a portion of the molded resin portion 50 on the -z-axis side of the bearing holder 52. At least one power supply lead (not illustrated) for supplying power to the coils 30 is connected to the circuit board 8. The circuit board 8 is fixed to the second insulator 70 through winding terminals 7 connected to the coils 30.

As illustrated in FIGs. 1 and 3, the molded stator 5 further includes the first insulator 60 and second insulator 70, which are disposed between the coils 30 and the stator core 20. The first insulator 60 and second insulator 70 are made of, for example, thermoplastic resin. The molded stator 5 may be implemented such that it does not include the first insulator 60 and second insulator 70.

The first insulator 60 includes a first wall portion 61 as a first insulating portion, a second wall portion 62 as a second insulating portion, and a connecting portion 63. The first wall portion 61 covers end surfaces of the tooth tips 22b (see FIG. 2) of the teeth 22 on the +z-axis side, thereby insulating the teeth 22. The first wall portion 61 extends in the z-axis direction.

The first wall portion 61 includes inner surfaces 61a facing the permanent magnet 12, and engagement portions 61b provided in the inner surfaces 61a. The engagement portions 61b engage with the flux capture members 41. This facilitates positioning of the flux capture members 41 in molding of the molded resin portion 50. In the first embodiment, the engagement portions 61b are, for example, grooves (also referred to as "recesses") obtained by cutting end portions of the inner surfaces 61a on the -z-axis side, and the flux capture members 41 are fitted in the grooves. The engagement portions 61b may be grooves obtained by recessing central portions of the inner surfaces 61a in the z-axis direction. Also, the engagement portions 61b are not limited to grooves. For example, the engagement portions 61b may be projections that engage with recesses provided in the flux capture members 41.

The second wall portion 62 is located outward from the first wall portion 61 in radial directions. The second wall portion 62 covers an end surface of the yoke 21 on the +z-axis side, thereby insulating the yoke 21. The second wall portion 62 extends in the z-axis direction. When a length of the second wall portion 62 in the z-axis direction is denoted by $L_3$, and a length of the first wall portion 61 in the z-axis direction is denoted by $L_4$, the length $L_3$ is less than the length $L_4$. That is, the lengths $L_3$ and $L_4$ satisfy the following formula (2):

$$L_3 < L_4. \qquad (2)$$

This can reduce the amount of resin used in the first insulator 60.

The connecting portion 63 connects the first wall portion 61 and the second wall portion 62. The connecting portion 63 extends in radial directions. The connecting portion 63 insulates end surfaces of the tooth main bodies 22a (see FIG. 2) of the teeth 22 on the +z-axis side.

The second insulator 70 includes a third wall portion 71 as a first insulating portion, a fourth wall portion 72 as a second insulating portion, and a connecting portion 73. The third wall portion 71 insulates end surfaces of the tooth tips 22b (see FIG. 2) on the -z-axis side. The third wall portion 71 extends in the z-axis direction.

The third wall portion 71 includes inner surfaces 71a facing the permanent magnet 12, and engagement portions 71b provided in the inner surfaces 71a. The engagement portions 71b engage with the flux capture members 42. This facilitates positioning of the flux capture members 42 in molding of the molded resin portion 50. In the first embodiment, the engagement portions 71b are, for example, grooves obtained by cutting end portions of the inner surfaces 71a on the -z-axis side, and the flux capture members 42 are fitted in the grooves. The engagement portions 71b may be grooves obtained by recessing central portions of the inner surfaces 71a in the z-axis direction. Also, the engagement portions 71b are not limited to grooves. For example, the engagement portions 71b may be projections that engage with recesses provided in the flux capture members 42. Also, resin layers made of the thermosetting resin that is the material of the molded resin portion 50 may be disposed between the flux capture members 41 and 42 and the teeth 22 in the z-axis direction. Thus, the first insulating portion insulating the teeth 22 may be constituted by the insulator and the resin layers.

The fourth wall portion 72 is located outward from the third wall portion 71 in radial directions. The fourth wall portion 72 insulates an end surface of the yoke 21 (see FIG. 2) on the -z-axis side. The fourth wall portion 72 extends in the z-axis direction. The connecting portion 73 connects the third wall portion 71 and the fourth wall portion 72. The connecting portion 73 extends in radial directions. The connecting portion 73 insulates end surfaces of the tooth main bodies 22a (see FIG. 2) on the -z-axis side.

Each coil 30 has a coil end portion 30a projecting from the tooth 22 outward in the z-axis direction. A height A of the coil end portion 30a in the z-axis direction decreases inward in a radial direction from a leading end of the coil end portion 30a. In the first embodiment, the height A of the coil end portion 30a decreases inward from an outer end of the coil end portion 30a in the radial direction. The height A is a height of coils stacked on an end surface of the tooth 22 in the z-axis direction by the coil 30 being wound around the tooth 22. As described above, the first wall portion 61 and third wall portion 71 respectively include the engagement portions 61b and 71b, which engage with the flux capture members 41 and 42. Thus, the first wall portion 61 is lower in strength than the second wall portion 62, and the third wall portion 71 is lower in strength than the fourth wall portion 72. The height A of the coil end portion 30a may be greatest at a central portion of the coil end portion 30a in the radial direction, and decrease inward or outward from the central portion in the radial direction.

When an operation (also referred to below as a "winding operation") of winding windings around the teeth 22 with the first insulator 60 and second insulator 70 therebetween is performed, stresses (also referred to below as "winding stresses") occur in the first insulator 60 and second insulator 70 due to tensions of the windings acting on the first insulator 60 and second insulator 70. In the first embodiment, since the heights A of the coil end portions 30a decrease inward from the leading ends of the coil end portions 30a in the radial directions, the winding stress occurring in the first wall portion 61 is less than the winding stress occurring in the second wall portion 62. Also, the winding stress occurring in the third wall portion 71 is less than the winding stress occurring in the fourth wall portion 72. Thus, the first wall portion 61 and third wall portion 71 can be prevented from being deformed by the winding stresses. Specifically, the first wall portion 61 and third wall portion 71 can be prevented from being inclined toward the permanent magnet 12 by the winding stresses.

FIG. 4 is a plan view illustrating part of the configuration of the molded stator 5 illustrated in FIG. 1. As illustrated in FIGs. 1 and 4, the motor 100 further includes the winding terminals 7 connected to the coils 30. The winding terminals 7 are inserted in terminal insertion holes (not illustrated) provided in the circuit board 8 (see FIG. 1).

The winding terminals 7 are fixed to the fourth wall portion 72. As described above, the third wall portion 71 having the engagement portions 71b is lower in strength than the fourth wall portion 72. Thus, by virtue of the winding terminals 7 being fixed to the fourth wall portion 72, the winding terminals 7 can be fixed sufficiently firmly.

As illustrated in FIG. 4, the molded stator 5 further includes a crossover wire 31 connecting two coils 30 adjacent in the circumferential direction R. Specifically, the molded stator 5 includes a crossover wire 31 connecting coils 30 of the same phase (e.g., U phase) adjacent to each other in the circumferential direction R. The crossover wire 31 is guided by the fourth wall portion 72, which is higher in strength than the third wall portion 71. Specifically, the crossover wire 31 extends along a surface of the fourth wall portion 72 facing outward in radial directions. As above, in the example illustrated in FIG. 4, since the crossover wire 31 is not guided by the third wall portion 71, the crossover wire 31 is not in contact with the third wall portion 71.

Thereby, the third wall portion 71 can be prevented from being deformed by the crossover wire 31. Specifically, the third wall portion 71 can be prevented from being inclined toward the permanent magnet 12 by the crossover wire 31.

<Advantages of first embodiment>

In the first embodiment described above, the motor 100 includes the permanent magnet 12 as a rotor main body having the first end surface 12a that is one end surface in the z-axis direction and the second end surface 12b that is the other end surface, and the molded stator 5. The molded stator 5 includes the stator core 20, and the length $L_1$ of the stator core 20 in the z-axis direction is less than the length $L_2$ of the permanent magnet 12 in the z-axis direction. Thereby, since the number of electromagnetic steel sheets used in the stator core 20 is reduced, the cost of the molded stator 5 can be reduced. Thus, the cost of the motor 100 can be reduced.

Also, in the first embodiment, the motor 100 includes the flux capture members 41 disposed on the first end surface 22c of the stator core 20 and made of magnetic material, the flux capture members 41 capturing the magnetic flux of the permanent magnet 12. Thereby, the magnetic flux generated from the end portion of the permanent magnet 12 on the +z-axis side that does not face the stator core 20 in radial directions flows to the stator core 20 and coils 30 through the flux capture members 41. Thus, the reduction in the amount of magnetic flux flowing from the permanent magnet 12 of the rotor 1 to the molded stator 5 can be reduced. Thus, in the motor 100, it is possible to reduce the reduction in the amount of magnetic flux flowing from the permanent magnet 12 to the molded stator 5 while saving the cost.

Also, in the first embodiment, the motor 100 further includes the flux capture members 42 disposed on the second end surface 22d of the stator core 20 and made of magnetic material that captures the magnetic flux of the permanent magnet 12. Thereby, the magnetic flux generated from the end portion of the permanent magnet 12 on the -z-axis side that does not face the stator core 20 in radial directions flows to the stator core 20 and coils 30 through the flux capture members 41. Thus, it is possible to further reduce the reduction in the amount of magnetic flux flowing from the permanent magnet 12 to the molded stator 5.

Also, in the first embodiment, the flux capture members 41 and 42 and stator core 20 are covered by the molded resin portion 50. Thereby, no fasteners for mounting the flux capture members 41 and 42 to the stator core 20 are required. Thus, it is possible to reduce the number of parts of the motor 100, and simplify the assembly process of the motor 100.

Also, in the first embodiment, the flux capture members 41 and 42 are disposed on the teeth 22 of the stator core 20. Thus, since the flux capture members 41 and 42 are located close to the permanent magnet 12, the magnetic flux of the permanent magnet 12 is easily captured by the flux capture members 41 and 42.

Also, in the first embodiment, the molded stator 5 includes the first wall portion 61 of the first insulator 60 that insulates the first end surfaces 22c of the teeth 22 on the +z-axis side, and the first wall portion 61 includes the engagement portions 61b that engage with the flux capture members 41. This facilitates positioning of the flux capture members 41 in molding of the molded resin portion 50.

Also, in the first embodiment, the molded stator 5 includes the third wall portion 71 of the second insulator 70 that insulates the second end surfaces 22d of the teeth 22 on the -z-axis side, and the third wall portion 71 includes the engagement portions 71b that engage with the flux capture members 42. This facilitates positioning of the flux capture members 42 in molding of the molded resin portion 50.

Also, in the first embodiment, the length $L_3$ of the second wall portion 62, which insulates the yoke 21, of the first insulator 60 in the z-axis direction is less than the length $L_4$ of the first wall portion 61, which supports the flux capture members 41, in the z-axis direction. This can reduce the amount of resin used in the first insulator 60.

Also, in the first embodiment, the molded stator 5 includes the coils 30 wound around the teeth 22 with the first insulator 60 and second insulator 70 therebetween, and the height A of the coil end portion 30a of each coil 30 decreases inward in a radial direction from the leading end of the coil end portion 30a. This reduces the winding stresses acting on the first wall portion 61 and third wall portion 71 during the winding operation, which can reduce deformation of the first wall portion 61 and third wall portion 71 due to the winding stresses.

Also, in the first embodiment, the motor 100 includes the winding terminals 7 connected to the coils 30, and the winding terminals 7 is fixed to the fourth wall portion 72 having a strength higher than that of the third wall portion 71. Thereby, the winding terminals 7 can be fixed sufficiently firmly.

Also, in the first embodiment, the molded stator 5 further includes the crossover wire 31 connecting adjacent two of the multiple coils 30, and the crossover wire 31 is guided by the fourth wall portion 72. Thereby, since the crossover wire 31 is not in contact with the third wall portion 71, the third wall portion 71 can be prevented from being deformed by the crossover wire 31.

<<Second embodiment>>

FIG. 5 is a sectional view illustrating a configuration of a motor 200 according to a second embodiment. In FIG. 5, elements that are the same as or correspond to those illustrated in FIG. 1 are given reference characters that are the same as those shown in FIG. 1. A molded stator 205 of the motor 200 according to the second embodiment is different from the motor 100 according to the first embodiment in that it does not include the flux capture members 42. Otherwise, the motor 200 according to the second embodiment is the same as the motor 100 according to the first embodiment. Thus, the following description refers to FIG. 2.

As illustrated in FIG. 5, the motor 200 includes a rotor 1 and the molded stator 205. The molded stator 205 includes a stator core 20, multiple coils 30, flux capture members 41, and a molded resin portion 250. In the second embodiment, since the flux capture members provided in the molded stator 205 are only the flux capture members 41, the number of parts of the motor 200 is reduced, and the assembly process of the motor 200 can be simplified.

The molded stator 205 further includes a first insulator 60 and a second insulator 270. The second insulator 270 includes a third wall portion 271.

The third wall portion 271 insulates end surfaces of tooth tips 22b (see FIG. 2) on the -z-axis side. The third wall portion 271 extends in the z-axis direction. When a thickness of the third wall portion 271 in radial directions is denoted by $W_1$, and a thickness in radial directions of a vertical portion 61c of a first wall portion 61 extending in the z-axis direction is denoted by $W_2$, the thickness $W_1$ is greater than the thickness $W_2$. That is, the thicknesses $W_1$ and $W_2$ satisfy the following formula (3):

$$W_1 > W_2. \qquad (3)$$

This is because in the second embodiment, no engagement portions (e.g., the engagement portions 71b illustrated in FIG. 1 described above) engaging with flux capture members are formed in the third wall portion 271.

By virtue of the thicknesses $W_1$ and $W_2$ satisfying formula (3), the third wall portion 271 is higher in strength than the first wall portion 61. Thus, the winding stress during the winding operation can be received by the third wall portion 271, and deformation of the first wall portion 61 by the winding stress can be reduced. In the motor 200, a distance between the shaft 11 and a surface of the third wall portion 271 facing outward in radial directions (or an outer diameter of the third wall portion 271) may be greater than a distance between the shaft 11 and a surface of the first wall portion 61 facing outward in radial directions (or an outer diameter of the first wall portion 61). Also in this case, deformation of the first wall portion 61 by the winding stress can be reduced.

In the motor 200, a flux capture member 41 is disposed on a first end surface 22c (see FIG. 2) of each of multiple teeth 22. Two flux capture members 41 adjacent in the circumferential direction R are not connected together. Thus, while the motor 200 is rotating, the flux capture members 41 may be vibrated by the magnetic force of the permanent magnet 12 acting on the flux capture members 41.

In the molded resin portion 250, when a thickness of a portion between a surface of the first wall portion 61 facing outward in radial directions and an outer periphery 253 of the molded resin portion 250 is denoted by $W_3$, and a thickness of a portion between a surface of the stator core 20 facing outward in radial directions and the outer periphery 253 of the molded resin portion 250 is denoted by $W_4$, the thickness $W_3$ is greater than the thickness $W_4$. That is, the thicknesses $W_3$ and $W_4$ satisfy the following formula (4) :

$$W_3 > W_4. \qquad (4)$$

Thereby, even when the magnetic force of the permanent magnet 12 acts on the flux capture members 41 while the motor 200 is rotating, since a resin portion of the molded resin portion 250 surrounding the flux capture members 41 is thick, the resin portion has high stiffness. This can reduce vibration of the flux capture members 41 during rotation of the motor 200.

The molded resin portion 250 includes a first resin portion 291 and a second resin portion 292. The first resin portion 291 covers a portion on the flux capture member 41 side of a plane V including an end surface 20a of the stator core 20 on the +z-axis side (or the first end surfaces 22c of the teeth 22 illustrated in FIG. 3). The second resin portion 292 covers a portion on the stator core 20 side of the plane V.

When a distance between the axis C and an outer periphery 291c of the first resin portion 291 is denoted by $D_1$, and a distance between the axis C and an outer periphery 292c of the second resin portion 292 is denoted by $D_2$, the distance $D_1$ is less than the distance $D_2$. That is, the distances $D_1$ and $D_2$ satisfy the following formula (5):

$$D_1 < D_2. \qquad (5)$$

This can reduce the amount of resin used in the first resin portion 291.

While the motor 200 is rotating, magnetic attractive force acts between the permanent magnet 12 and the flux capture members 41 and between the permanent magnet 12 and the stator core 20. The magnetic attractive force between the permanent magnet 12 and the flux capture members 41 is smaller than the magnetic attractive force between the permanent magnet 12 and the stator core 20. In the example illustrated in FIG. 5, the metal bracket 4 is fixed to the first resin portion 291 covering the flux capture members 41. Thus, compared to a configuration in which the metal bracket is fixed to the second resin portion, the metal bracket 4 can be prevented from coming off due to the magnetic attractive force.

The molded stator 205 further includes a mounting portion 255 extending outward in radial directions from the outer periphery 253 of the molded resin portion 250. The mounting portion 255 is mounted to a support of an object (e.g., a motor support provided in an outdoor unit) to which the motor 200 is mounted. The mounting portion 255 has insertion holes 255a in which fasteners (e.g., bolts) are inserted.

In the second embodiment, the mounting portion 255 is provided in the second resin portion 292 of the molded resin portion 250. As described above, the second resin portion 292 covers the stator core 20, which is heavy in weight. Thus, by virtue of the mounting portion 255 being provided in the second resin portion 292, the motor 200 can be fixed to the mounting object sufficiently firmly.

<Advantages of second embodiment>

In the second embodiment described above, the flux capture members provided in the molded stator 205 of the motor 200 are only the flux capture members 41. This can reduce the number of parts constituting the motor 200, and simplify the assembly process of the motor 200.

Also, in the second embodiment, when the thickness of the third wall portion 271 in radial directions is denoted by $W_1$, and the thickness of the vertical portion 61c of the first wall portion 61 in radial directions is denoted by $W_2$, the thickness $W_1$ is greater than the thickness $W_2$. Thus, the third wall portion 271 is higher in strength than the first wall portion 61. Thus, the winding stress during the winding operation can be received by the third wall portion 271, and deformation of the first wall portion 61 by the winding stress can be reduced.

Also, in the second embodiment, in the molded resin portion 250, when the thickness of the portion between the surface of the first wall portion 61 facing outward in radial directions and the outer periphery 253 of the molded resin portion 250 is denoted by $W_3$, and the thickness of the portion between the surface of the stator core 20 facing outward in radial directions and the outer periphery 253 of the molded resin portion 250 is denoted by $W_4$, the thickness $W_3$ is greater than the thickness $W_4$. Thereby, even when the magnetic force of the permanent magnet 12 acts on the flux capture members 41 while the motor 200 is rotating, since the resin portion surrounding the flux capture members 41 is thick, the resin portion has high stiffness. This can reduce vibration of the flux capture members 41 during rotation of the motor 200.

Also, in the second embodiment, the molded resin portion 250 includes the first resin portion 291 covering the portion on the flux capture member 41 side of the plane V including the end surface 20a of the stator core 20 on the +z-axis side, and the second resin portion 292 covering the portion on the stator core 20 side of the plane V. The distance $D_1$ between the axis C and the outer periphery 291c of the first resin portion 291 is less than the distance $D_2$ between the axis C and the outer periphery 292c of the second resin portion 292. This can reduce the amount of resin used in the first resin portion 291.

Also, in the second embodiment, the metal bracket 4 is fixed to the first resin portion 291. While the motor 200 is rotating, magnetic attractive force acts between the permanent magnet 12 and the flux capture members 41 and between the permanent magnet 12 and the stator core 20. In the second embodiment, the magnetic attractive force between the permanent magnet 12 and the flux capture members 41 is smaller than the magnetic attractive force between the permanent magnet 12 and the stator core 20. Thus, the metal bracket 4 can be prevented from coming off due to the magnetic attractive force.

Also, in the second embodiment, the motor 200 further includes the mounting portion 255 mounted to a mounting object, and the mounting portion 255 is provided in the second resin portion 292 of the molded resin portion 250. Since the second resin portion 292 covers the stator core 20, which is heavy in weight, by the mounting portion 255 being provided in the second resin portion 292, the motor 200 can be fixed to the mounting object sufficiently firmly.

**<<First modification of second embodiment>>**

FIG. 6 is a sectional view illustrating a configuration of a motor 200a according to a first modification of the second embodiment. In FIG. 6, elements that are the same as or correspond to those illustrated in FIG. 5 are given reference characters that are the same as those shown in FIG. 5. The motor 200a according to the first modification of the second embodiment is different from the motor 200 according to the second embodiment in the shape of a molded resin portion 250a and the shape of a first insulator 260a. Otherwise, the motor 200a according to the first modification of the second embodiment is the same as the motor 200 according to the second embodiment. Thus, the following description refers to FIG. 5.

As illustrated in FIG. 6, the motor 200a includes a rotor 1 and a molded stator 205a. The molded stator 205a includes a stator core 20, multiple coils 30, flux capture members 41, and the molded resin portion 250a.

The molded resin portion 250a includes a first resin portion 291a covering a portion on the flux capture member 41 side of a plane V including an end surface 20a of the stator core 20 on the +z-axis side, and a second resin portion 292a covering a portion on the stator core 20 side of the plane V. When a distance between the axis C and an outer periphery 291c of the first resin portion 291a is denoted by $D_{11}$, and a distance between the axis C and an outer periphery 292c of the second resin portion 292a is denoted by $D_{12}$, the distance $D_{11}$ is greater than the distance $D_{12}$. That is, the distances $D_{11}$ and $D_{12}$ satisfy the following formula (6) :

$$D_{11} > D_{12}. \qquad (6)$$

Thereby, since a resin portion of the molded resin portion 250a surrounding the flux capture members 41 is thicker in radial directions, the resin portion has higher stiffness. This can further reduce vibration of the flux capture members 41 during rotation of the motor 200a.

The molded stator 205a further includes the first insulator 260a and a second insulator 270a.

The first insulator 260a includes a first wall portion 261a. The first wall portion 261 insulates end surfaces of tooth tips 22b (see FIG. 2) of teeth 22 on the +z-axis side. The first wall portion 261 extends in the z-axis direction.

The second insulator 270a includes a third wall portion 271a. The third wall portion 271a insulates end surfaces of the tooth tips 22b (see FIG. 2) of the teeth 22 on the -z-axis side. The third wall portion 271a extends in the z-axis direction.

When a length of the third wall portion 271a in the z-axis direction is denoted by $L_5$, and a length of the first wall portion 61 in the z-axis direction is denoted by $L_6$, the length $L_5$ is less than the length $L_6$. That is, the

lengths $L_5$ and $L_6$ satisfy the following formula (7):

$$L_5 < L_6. \qquad (7)$$

Here, a winding operation of winding windings around the teeth 22 (see FIG. 2) with the first insulator 260a and second insulator 270a therebetween is performed by using a nozzle winding machine. During the winding operation, a nozzle of the nozzle winding machine circles on the outer side of the first wall portion 261a of the first insulator 260a and the third wall portion 271a of the second insulator 270a in radial directions. By virtue of the length $L_5$ of the third wall portion 271a in the z-axis direction being less than the length $L_6$ of the first wall portion 261a in the z-axis direction, the radius of rotation of the nozzle can be reduced. Thus, since the nozzle can be made closer to the teeth 22, winding disorder of the windings during the winding operation can be reduced.

Also, when the nozzle winding machine includes a former that is a winding guide for guiding the windings supplied from the nozzle to the slots 23 (see FIG. 2), by virtue of the length $L_5$ being less than the length $L_6$, an inner diameter of the former can be reduced. Thus, the former can be downsized. Also, by virtue of the former being downsized, since the former can be made closer to the teeth 22 in the winding operation, winding disorder of the windings during the winding operation can be reduced.

<Advantages of first modification of second embodiment>

In the first modification of the second embodiment described above, the distance $D_{11}$ between the axis C and the outer periphery 291c of the first resin portion 291a is greater than the distance $D_{12}$ between the axis C and the outer periphery 292c of the second resin portion 292a. That is, in the first modification of the second embodiment, the first resin portion 291a is thicker than the second resin portion 292a in radial directions. Thereby, since the resin portion of the molded resin portion 250a surrounding the flux capture members 41 is thicker in radial directions, the resin portion has higher stiffness. This can further reduce vibration of the flux capture members 41 during rotation of the motor 200a.

Also, in the first modification of the second embodiment, the length $L_5$ of the third wall portion 271a in the z-axis direction is less than the length $L_6$ of the first wall portion 261a in the z-axis direction. This makes it possible to reduce the radius of rotation of a nozzle that circles on the outer side of the first wall portion 261a and third wall portion 271a in radial directions during the winding operation. Thus, since the nozzle can be made closer to the teeth 22, winding disorder of the windings during the winding operation can be reduced. Also, by virtue of the length $L_5$ of the third wall portion 271a in the z-axis direction being less than the length $L_6$ of the first wall portion 261a in the z-axis direction, the former of the nozzle winding machine can be downsized. Also, by virtue of the former being downsized, since the former can be made closer to the teeth 22, winding disorder of the windings during the winding operation can be reduced.

<<Second modification of second embodiment>>

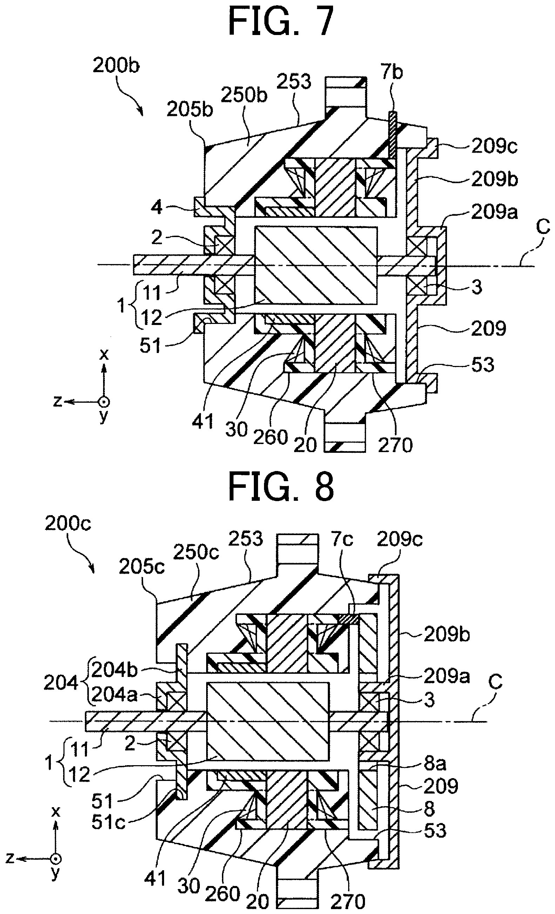

FIG. 7 is a sectional view illustrating a configuration of a motor 200b according to a second modification of the second embodiment. In FIG. 7, elements that are the same as or correspond to those illustrated in FIG. 5 are given reference characters that are the same as those shown in FIG. 5. The motor 200b according to the second modification of the second embodiment is different from the motor 200 according to the second embodiment in that it does not include the circuit board 8 and further includes a second metal bracket 209. Otherwise, the motor 200b according to the second modification of the second embodiment is different from the motor 200 according to the second embodiment.

As illustrated in FIG. 7, the motor 200b includes a rotor 1, a bearing 2, a bearing 3, a first metal bracket 4 as a first bearing holder, a molded stator 205b, and the second metal bracket 209 as a second bearing holder. The molded stator 205b includes a stator core 20, multiple coils 30, flux capture members 41, and a molded resin portion 250b. The molded resin portion 250b has a first opening 51 in which the first metal bracket 4 is fixed, and a second opening 53 in which the second metal bracket 209 is fixed.

The second metal bracket 209 is a bearing holder that holds the bearing 3. The second metal bracket 209 is formed from, for example, a steel sheet. As above, by virtue of the motor 200b having the second metal bracket 209, since no bearing holder for holding the bearing 3 need be provided in the molded resin portion 250b, the amount of resin used in the molded resin portion 250b can be reduced.

The second metal bracket 209 includes a cylindrical portion 209a, a flange portion 209b, and a fixing portion 209c. The cylindrical portion 209a is a portion of the second metal bracket 209 that holds the bearing 3. The flange portion 209b extends outward in radial directions from an end portion of the load side of the cylindrical portion 209a. The fixing portion 209c is a portion of the second metal bracket 209 that is fixed in the second opening 53 of the molded resin portion 250b. The fixing portion 209c is fixed in the second opening 53 by, for example, press fitting.

The motor 200b further includes a winding terminal 7b that is connected to the coils 30 and fixed to a second insulator 270. A tip of the winding terminal 7b projects from an outer periphery 253 of the molded resin portion 250b. This allows the winding terminal 7b to be connected to a circuit board (not illustrated) provided outside the motor 200b. The tip of the winding terminal 7b may project from a bottom surface of the molded resin portion 250b.

<Advantages of second modification of second embodiment>

In the second modification of the second embodiment described above, the motor 200b includes the molded stator 205b including the molded resin portion 250b, the bearing 3 that supports the anti-load side of the shaft 11, and the second metal bracket 209 that holds the bearing 3. The second metal bracket 209 is fixed to the molded resin portion 250b. Thereby, since no bearing holder for holding the bearing 3 need be provided in the molded resin portion 250b, the amount of resin used in the molded resin portion 250b can be reduced.

<<Third modification of second embodiment>>

FIG. 8 is a sectional view illustrating a configuration of a motor 200c according to a third modification of the second embodiment. In FIG. 8, elements that are the same as or correspond to those illustrated in FIG. 5 are given reference characters that are the same as those shown in FIG. 5. The motor 200c according to the third modification of the second embodiment is different from the motor 200 according to the second embodiment in the shape of a molded resin portion 250c, the shape of a first metal bracket 204, and the shape of a second metal bracket 209. Otherwise, the motor 200c according to the third modification of the second embodiment is the same as the motor 200 according to the second embodiment.

As illustrated in FIG. 8, the motor 200c includes a rotor 1, a bearing 2, a bearing 3, the first metal bracket 204, a molded stator 205c, and the second metal bracket 209. The molded stator 205c includes a stator core 20, multiple coils 30, flux capture members 41, and the molded resin portion 250c. The molded resin portion 250c has a first opening 51 in which the first metal bracket 204 is fixed, and a second opening 53 in which a circuit board 8 is disposed.

The first metal bracket 204 includes a cylindrical portion 204a and a flange portion 204b. The cylindrical portion 204a is a portion of the first metal bracket 204 that holds the bearing 2. The flange portion 204b extends outward in radial directions from an end portion of the cylindrical portion 204a on the anti-load side.

A tip of the flange portion 204b of the first metal bracket 204 is covered by the molded resin portion 250c. Thus, the tip of the flange portion 204b is embedded in a groove 51c provided in the first opening 51. This is because in the third modification of the second embodiment, when the molded resin portion 250c is molded, the first metal bracket 204 is placed in a mold, and molding of the molded resin portion 250c and fixation of the first metal bracket 204 to the molded resin portion 250c are simultaneously performed.

Thus, since the assembly process of the motor 200c does not require a step of press-fitting the first metal bracket 204 into the molded resin portion 250c, the assembly process of the motor 200c can be simplified. It is sufficient that the molded resin portion 250c cover at least part (in the example illustrated in FIG. 8, the tip of the flange portion 204b) of the first metal bracket 204. For example, the molded resin portion 250c may cover the whole of the first metal bracket 204.

In the third modification of the second embodiment, a flange portion 209b of the second metal bracket 209 extends outward in radial directions from an end portion of a cylindrical portion 209a on the anti-load side. Also, a fixing portion 209c of the second metal bracket 209 is fixed to an outer periphery 253 of the molded resin portion 250c. The fixing portion 209c is fixed to the outer periphery 253 by, for example, press fitting.

The molded stator 205c further includes a winding terminal 7c fixed to a second insulator 270, and the circuit board 8 connected to the winding terminal 7c. The circuit board 8 includes a hollow portion 8a in which a shaft 11 and the cylindrical portion 209a of the second metal bracket 209 are inserted.

<Advantages of third modification of second embodiment>

In the third modification of the second embodiment described above, the molded resin portion 250c covers at least part (in the example illustrated in FIG. 8, the tip of the flange portion 204b) of the first metal bracket 204 holding the bearing 2. Thus, since the assembly process of the motor 200c does not require a step of press-fitting the first metal bracket 204 into the molded resin portion 250c, the assembly process of the motor 200c can be simplified.

**Reference Signs List**

2,3 bearing, 4, 204 first metal bracket, 5, 205, 205a, 205b, 205c molded stator, 7, 7b, 7c winding terminal, 12 permanent magnet, 20 stator core, 21 yoke, 22 tooth, 22c first end surface, 22d second end surface, 30 coil, 31 crossover wire, 41, 42 flux capture member, 50, 250, 250a, 250b, 250c molded resin portion, 60, 260a first insulator, 61, 261a first wall portion, 61b engagement portion, 62 second wall portion, 70, 270, 270a second insulator, 71, 271, 271a third wall portion, 71b engagement portion, 72 fourth wall portion, 100, 200, 200a, 200b, 200c motor, 209 second metal bracket, 253, 291c, 292c outer periphery, 255 mounting portion, 291 first resin portion, 292 second resin portion, A height, $D_1$, $D_2$, $D_{11}$, $D_{12}$ distance, $L_1$, $L_2$, $L_3$, $L_4$, $L_5$, $L_6$ length, $W_1$, $W_2$, $W_3$, $W_4$ thickness.

**Claims**

**1.** A motor comprising:

a rotor main body supported by a rotary shaft; and
a stator,
wherein the stator includes:

a stator core having a first end surface that is one end surface in an axial direction of the rotary shaft, and a second end surface that is another end surface in the axial direction, a length of the stator core in the axial direction being less than a length of the rotor main body in the axial direction;
at least one flux capture member disposed on at least one of the first end surface and the second end surface and made of magnetic material, the at least one flux capture member capturing a magnetic flux of the rotor main body; and
a molded resin portion covering the at least one flux capture member and the stator core.

2. The motor of claim 1, wherein the at least one flux capture member is disposed on a tooth of the stator core.

3. The motor of claim 2, wherein

the stator further includes a first insulating portion insulating the tooth, and
the first insulating portion has an engagement portion engaging with the at least one flux capture member.

4. The motor of claim 3, wherein

the stator further includes a coil wound around the tooth with the first insulating portion therebetween,
the coil has a coil end portion projecting from the tooth in the axial direction, and
a height of the coil end portion in the axial direction decreases inward in a radial direction of the stator from a leading end of the coil end portion.

5. The motor of claim 4, wherein

the stator further includes a winding terminal connected to the coil, and a second insulating portion insulating a yoke of the stator core, and
the winding terminal is fixed to the second insulating portion.

6. The motor of claim 3, wherein

the stator further includes a plurality of coils, a crossover wire connecting adjacent two of the plurality of coils, and a second insulating portion insulating a yoke of the stator core, and
the crossover wire is guided by the second insulating portion.

7. The motor of claim 1, wherein

the stator further includes a first insulator,
the first insulator includes:

a first wall portion insulating one end surface of a tooth of the stator core in the axial direction and supporting the at least one flux capture member; and
a second wall portion insulating one end surface of a yoke of the stator core in the axial direction, and

a length of the second wall portion in the axial direction is less than a length of the first wall portion in the axial direction.

8. The motor of claim 7, wherein

the stator further includes a second insulator,
the second insulator includes a third wall portion covering another end surface of the tooth in the axial direction,
the first wall portion includes a vertical portion extending in the axial direction, and
$W_1 > W_2$, where $W_1$ is a thickness of the third wall portion in a radial direction of the stator, and $W_2$ is a thickness of the vertical portion in the radial direction.

9. The motor of claim 8, wherein a length of the third wall portion in the axial direction is less than a length of the first wall portion in the axial direction.

10. The motor of any one of claims 3 to 6, wherein $W_3 > W_4$, where $W_3$ is a thickness of a portion of the molded resin portion between a surface of the first insulating portion facing outward in a radial direction of the stator and an outer periphery of the molded resin portion, and $W_4$ is a thickness of a portion of the molded resin portion between a surface of the stator core facing outward in the radial direction and the outer periphery.

11. The motor of any one of claims 1 to 10, wherein

the at least one flux capture member is disposed on the first end surface,
the molded resin portion includes:

a first resin portion covering a portion of the stator on the flux capture member side of a plane including the first end surface; and
a second resin portion covering a portion of the stator on the stator core side of the plane, and

$D_1 < D_2$, where $D_1$ is a distance between the rotary shaft and an outer periphery of the first resin portion, and $D_2$ is a distance between the rotary shaft and an outer periphery of the second resin portion.

**12.** The motor of claim 11, wherein

the stator further includes a mounting portion mounted to a mounting object, and
the mounting portion is provided in the second resin portion.

**13.** The motor of any one of claims 1 to 10, wherein

the at least one flux capture member is disposed on the first end surface,
the molded resin portion includes:

a first resin portion covering a portion of the stator on the flux capture member side of a plane including the first end surface; and
a second resin portion covering a portion of the stator on the stator core side of the plane, and

$D_{11} > D_{12}$, where $D_{11}$ is a distance between the rotary shaft and an outer periphery of the first resin portion, and $D_{12}$ is a distance between the rotary shaft and an outer periphery of the second resin portion.

**14.** The motor of any one of claims 11 to 13, further comprising:

a first bearing supporting a load side of the rotary shaft; and
a first bearing holder fixed to the molded resin portion and holding the first bearing.

**15.** The motor of claim 14, wherein the first bearing holder is fixed to the first resin portion.

**16.** The motor of claim 14 or 15, wherein the molded resin portion covers at least part of the first bearing holder.

**17.** The motor of any one of claims 14 to 16, further comprising:

a second bearing supporting an anti-load side of the rotary shaft; and
a second bearing holder fixed to the molded resin portion and holding the second bearing.

**18.** The motor of any one of claims 1 to 17, wherein the at least one flux capture member is disposed on both the first end surface and the second end surface.

**19.** The motor of any one of claims 1 to 18, wherein the at least one flux capture member is made of metal.

# FIG. 1

# FIG. 2

# FIG. 3

# FIG. 4

# FIG. 5

# FIG. 6

# FIG. 7

# FIG. 8

## INTERNATIONAL SEARCH REPORT

| International application No. |
|---|
| PCT/JP2021/007010 |

### A. CLASSIFICATION OF SUBJECT MATTER
Int.Cl. H02K15/12(2006.01)i, H02K1/27(2006.01)i
FI: H02K15/12D, H02K1/27501A

According to International Patent Classification (IPC) or to both national classification and IPC

### B. FIELDS SEARCHED

Minimum documentation searched (classification system followed by classification symbols)
Int.Cl. H02K15/12, H02K1/27

Documentation searched other than minimum documentation to the extent that such documents are included in the fields searched
Published examined utility model applications of Japan        1922-1996
Published unexamined utility model applications of Japan      1971-2021
Registered utility model specifications of Japan              1996-2021
Published registered utility model applications of Japan      1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2000-287423 A (MATSUSHITA ELECTRIC INDUSTRIAL CO., LTD.) 13 October 2000 (2000-10-13), paragraph [0025] | 1-19 |
| A | US 2005/0017590 A1 (A.O. SMITH CORPORATION) 27 January 2005 (2005-01-27), paragraph [0070] | 1-19 |
| A | JP 2009-254173 A (CANON INC.) 29 October 2009 (2009-10-29), claim 4 | 1-19 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 April 2021 | 18 May 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

```
JP 2000-287423 A   13 October 2000    (Family: none)

US 2005/0017590 A1 27 January 2005    (Family: none)

JP 2009-254173 A   29 October 2009    US 2009/0251012 A1
                                       claim 4
                                       EP 2109209 A2
```

Form PCT/ISA/210 (patent family annex) (January 2015)

**REFERENCES CITED IN THE DESCRIPTION**

**Patent documents cited in the description**

- JP 2005198440 A